# EUROPÄISCHE PATENTSCHRIFT

(11) **EP 2 735 485 B1**
(45) Veröffentlichungstag und Bekanntmachung des Hinweises auf die Patenterteilung: **10.08.2016**
(21) Anmeldenummer: 13186287.2
(22) Anmeldetag: 27.09.2013
(51) Int. Cl.: B60T 17/22

(54) **Verfahren zur Identifizierung eines Ausfalls eines Bremskreislaufsystems eines Fahrzeuges und ein solches Verfahren nutzendes Bremssystem**
Method for identifying a failure of a brake circuit system in a vehicle and a brake system using such a method
Procédé d'identification d'une panne d'un système de circuit de freinage d'un véhicule et système de freinage utilisant un tel procédé

(30) Priorität: 26.11.2012 DE 102012221530
(43) Veröffentlichungstag der Anmeldung: 28.05.2014
(73) Patentinhaber: ROBERT BOSCH GMBH, 70442 Stuttgart (DE)
(72) Erfinder: Bruex, Thomas, 71720 Oberstenfeld (DE); Schmieg, Benno, 74076 Heilbronn (DE)

(56) Entgegenhaltungen:
- DE-A1-102006 007 731
- GB-A- 2 317 663
- US-A1- 2011 077 832

## Beschreibung

Die vorliegende Erfindung betrifft ein Verfahren zur Identifizierung eines Ausfalls eines Bremskreislaufsystems eines Fahrzeuges und ein solches Verfahren nutzendes Bremssystem, wobei das Fahrzeug insbesondere ein Elektro- und/oder Hybrid-Fahrzeug ist.

### Stand der Technik

Allgemein weisen Bremssysteme für Fahrzeuge ein Potenzial für einen Ausfall des Bremssystems auf, bzw., wenn das Bremssystem aus zwei getrennten Bremskreislaufsystemen besteht, kann ein Bremskreislaufsystem oder es können auch beide Bremskreislaufsysteme ausfallen.

Die beiden Bremskreislaufsysteme sind mit dem Hauptbremszylinder verbunden, an welchem ein Bremspedal angekoppelt ist, welches vom Fahrer betätigbar ist, um zum Bremsen einen entsprechenden Druck in den Bremskreisläufen aufzubauen.

In der Regel ist bei heutigen Fahrzeugen das Bremssystem mit einem ESP (elektronisches Stabilitätsprogramm) gekoppelt, welches bei kritischen Fahrsituationen (z.B. Untersteuern/ Übersteuern des Fahrzeuges) aktiv auf der Grundlage von Sensorwerten (z.B. von einem Drehraten- bzw. Giergeschwindigkeitssensor und/oder einem Querbeschleunigungssensor) über eine Hydraulikeinheit (auch als Hydraulikaggregat oder Hydroaggregat bezeichnet) zur Druckbeeinflussung einen Bremsvorgang einleitet bzw. in den Bremsvorgang eingreift (insbesondere auch an einzelnen Rädern, um einem Unter- bzw. Übersteuern entgegenzuwirken).

Bei Elektro- bzw. Hybridfahrzeugen werden regenerative Bremssysteme eingesetzt, um den elektrischen Energiespeicher effizient laden zu können, d.h. beim Bremsen entstehende Energie wird zumindest teilweise über die als Generatoren wirkenden Elektromotoren zurückgewonnen, was als rekuperatives oder regeneratives Bremsen bezeichnet wird.

Zur weiteren Ausnutzung der kinetischen Energie muss bei höheren Verzögerungen das Betriebsbremssystem modifiziert werden. Dazu muss das gesamte oder ein Teil des Reibmoments der Betriebsbremse gegen regeneratorisches Bremsmoment ausgetauscht werden, ohne dass sich die Fahrzeugverzögerung bei konstant gehaltener Bremspedalstellung und -kraft ändert. Dies wird beim so genannten kooperativ regenerativen Bremssystem (CRBS) umgesetzt, bei dem Fahrzeugsteuerung und Bremssystem derart interagieren, dass stets genauso viel Reibbremsmoment zurückgenommen wird, wie generatorisches Bremsmoment vom Elektromotor ersetzt werden kann.

Bei dem CRBS wird bei jeder Bremsung der Hinterachsbremskreislauf vom Bremspedal entkoppelt, und zwar unabhängig davon, ob generatorisch oder hydraulisch verzögert wird.

In jedem Fall muss aber, d.h. bei Entkoppelung eines Bremskreislaufs vom Bremspedal, und damit von der Kontrolle des Fahrers, die funktionale Sicherheit gewährleistet sein, und der vom Fahrer entkoppelte Bremskreislauf überwacht werden.

Beispielsweise wird in der DE 10 2010 040 854 A1 ein Drucksensor in einem oder beiden Bremskreisläufen offenbart, welcher dazu dient, einen Fehlerzustand in einem Bremskreislauf, d.h. einen Druckabfall durch eine Leckage, durch welche Bremsfluid austritt, zu sensieren. Jedoch sind dadurch keine Details hinsichtlich der Art der Leckage möglich.

Außerdem beschreibt die GB 2 317 663 A ein Testverfahren zum Testen eines Bremssystems eines Fahrzeugs. In einer Mode 1 des Testverfahrens wird ein Druckaufbauverhalten in einem Hydraulikpfad untersucht, welcher sich zwischen einem (über eine Pumpe an einem Vorratsbehälter angebundenen) Überdruckventil einem zwischen die Radeinlassventile und dem Überdruckventil eingesetzten geschlossenen Trennventil erstreckt. In einer Mode 2 des Testverfahrens wird ein Druckaufbauverhalten in den Zwischenpfaden zwischen dem geöffneten Trennventil und den geschlossenen Radeinlassventilen untersucht. Vor oder während der Mode 1 wird die in Serie zu dem an ihrer Förderseite liegenden Trennventil angeordnete Pumpe betrieben.

### Offenbarung der Erfindung

Die Erfindung schafft ein Verfahren zur Identifizierung eines Ausfalls eines Bremskreislaufsystems eines Fahrzeuges mit den Merkmalen des Anspruchs 1.

### Vorteile der Erfindung

Der Vorteil der vorgeschlagenen Verfahren ergibt sich daraus, dass eine Unterscheidung zwischen verschiedenen Arten von Fehlerzuständen möglich ist, und somit eine situationsgerechte Maßnahme automatisch vorgenommen werden kann. Beispielsweise kann eine Leckage an einer Bremsflüssigkeitsleitung auftreten, oder es kann ein Fehlerzustand in der aktiven Druckversorgung (Hydraulikeinheit) oder an dem Drucksensor in dem entkoppelten Bremskreis auftreten.

Vorzugsweise umfasst das Verfahren bei der Erzeugung eines aktiven Druckaufbaus in dem geschlossenen Fluidsystem weiterhin einen Schritt des Öffnens eines ersten Einlassventils an einem ersten zu bremsenden Rad, einen Schritt zum Feststellen, ob ein Druckaufbau vorliegt, und, bei Vorliegen eines Druckaufbaues, einen Schritt zum Bestimmen, dass ein Druckabfall-Fehlerzustand an einem zweiten Einlassventil an einem zweiten zu bremsenden Rad vorliegt. Hierbei ist von Vorteil, dass eine "Rad"-individuelle Fehler-Unterscheidung möglich ist, und somit eine Fehlerzustand-Rückfallebene auf ein "3Rad"-Backup möglich ist.

Weiterhin wird bevorzugt, dass das Verfahren bei der Nicht-Erzeugung eines Druckaufbaus in dem geschlossenen Fluidsystem weiterhin einen Schritt des Öffnens des zweiten Einlassventils, wobei das erste Einlassventil geschlossen ist, einen Schritt zum Feststellen, ob ein Druckaufbau vorliegt, und, bei Nicht-Vorliegen eines Druckaufbaues, einen Schritt zum Bestimmen, dass ein Druckabfall-Fehlerzustand an dem mit dem ersten Rad gekoppelten ersten Einlassventil vorliegt, umfasst. Hierbei ist von Vorteil, dass bestimmt werden kann, wenn eine Leckage in einem der beiden Bremskreisläufe vorhanden ist, welcher der beiden Kreisläufe davon betroffen ist, bzw. wenn keine Leckage in den Bremskreisläufen vorhanden ist, dass der Fehler dann in der aktiven Druckversorgung liegen muss.

### Kurze Beschreibung der Zeichnungen

Nachfolgend wird die Erfindung anhand von Ausführungsformen in Verbindung mit den Figuren erläutert, wobei:
- Figur 1: eine schematische Anordnung eines Abschnitts eines Bremskreislaufsystems gemäß einer Ausführungsform der Erfindung zeigt;
- Figur 2: ein Flussdiagramm zur Erläuterung eines Verfahrens gemäß einer Ausführungsform der Erfindung zeigt;
- Figur 3: ein Flussdiagramm zur Erläuterung eines Verfahrens gemäß einer weiteren Ausführungsform der Erfindung zeigt; und
- Figur 4: ein Flussdiagramm zur Erläuterung eines Verfahrens gemäß noch einer weiteren Ausführungsform der Erfindung zeigt.

### Ausführungsformen der Erfindung

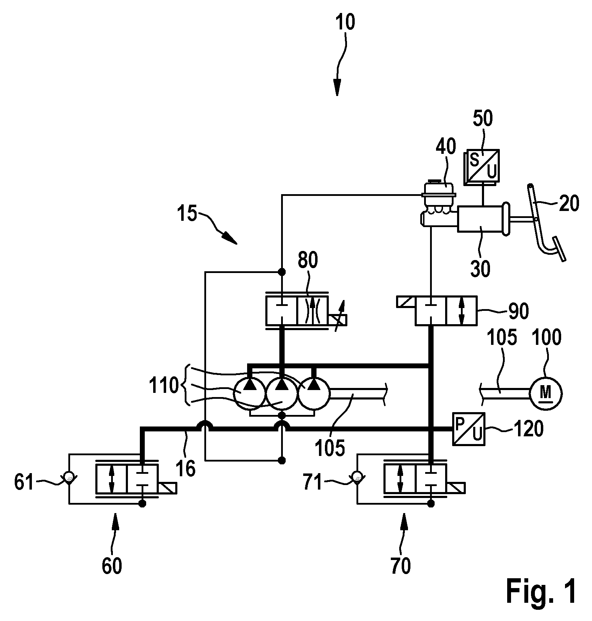

Figur 1 zeigt eine schematische Anordnung eines Abschnitts eines elektrohydraulischen Bremskreislaufsystems 10 gemäß einer Ausführungsform der Erfindung.

Hierbei sind nur die für das Verständnis der Erfindung wesentlichen Bestandteile des Bremskreislaufs für die Vorderachse eines Elektro- und/oder Hybridfahrzeuges dargestellt.

Es sei an dieser Stelle bemerkt, dass in dieser Beschreibung ein "Bremskreislaufsystem" zwar die Gesamtheit beider Bremskreisläufe, also zum Beispiel für Vorder- und Hinterachse, als auch alle dazugehörigen Komponenten mit umfasst, der Ausdruck "System" aber synonym auch für einen einzelnen Bremskreislauf verwendet werden kann.

Das System 10, welches im dargestellten Beispiel der Vorderachse des Fahrzeuges zugeordnet sein soll, umfasst neben einem Fluidleitungssystem 15, welches weiter unten noch näher erläutert wird, ein Bremspedal 20, einen Hauptbremszylinder 30, einen Vorratsbehälter 40 für Bremsfluid sowie einen Bremspedalwegsensor 50.

Weiterhin ist ein Einlassventil 60 für das linke Vorderrad (nicht dargestellt) und ein Einlassventil 70 für das rechte Vorderrad (nicht dargestellt). Mit den Einlassventilen 60, 70 sind jeweils, wie es dem Fachmann bekannt ist, Rückschlagventile 61, 71 gekoppelt, die aber für die vorliegende Erfindung nicht wesentlich sind.

Außerdem sind in Figur 1 ein Druckregelventil 80 (PCR = pressure control valve), ein Trennventil 90 sowie ein Pumpenmotor 100 (im Folgenden kurz auch "Pumpe") dargestellt, welche über eine Welle 105 mit drei Pumpenelementen 110 verbunden ist, wobei die Welle 105 entsprechende Kolben (nicht dargestellt) zur Erzeugung eines Druckes antreibt. Selbstverständlich ist jede beliebige Anzahl an Pumpenelementen 110 denkbar. Ein Drucksensor 120 ist ebenso an dem Fluidleitungssystem 15 angeschlossen. Es ist denkbar, dass statt des Pumpenmotors jede geeignete Art von Volumenfördereinheit verwendbar ist.

Das Druckregelventil 80 öffnet ab einem vorbestimmten Druck, um einerseits generell eine Beschädigung der Hydraulikeinheit zu verhindern, andererseits um allgemein größere "Druckspitzen" zu verhindern. Das wird dadurch erreicht, dass das Druckregelventil 80 teilweise bestromt bzw. angesteuert wird, um so den definierten Öffnungsdruck noch zu verringern.

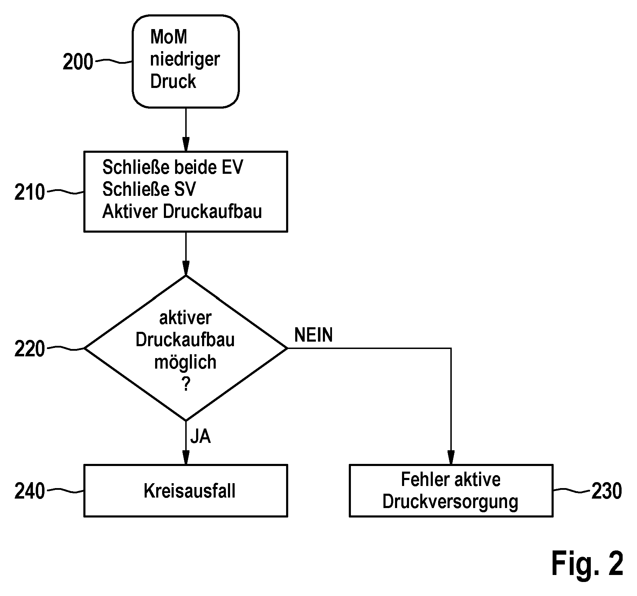

Mit Bezug auf Figur 2 soll nun eine Ausführungsform des erfindungsgemäßen Verfahrens anhand eines Flussdiagramms erläutert werden.

In einem ersten Schritt 200 stellt eine Drucküberwachungseinheit MoM (MoM = modulator monitoring) einen (zu) niedrigen Fluiddruck im System 10 fest. Daraufhin werden beide Einlassventile 60, 70 sowie das (stromlos offene) Trennventil 90 geschlossen, so dass, mit Bezug auf Figur 1, ein geschlossener Fluidleitungskreislauf 16 (mit stärkerer Linienbreite angedeutet) entsteht. Mittels des Pumpenmotors 100 der Pumpenelemente 110wird aktiv Druck in dem Fluidleitungskreislauf 16 erzeugt (Schritt 210).

In einem Schritt 220 wird über den Drucksensor 120 (siehe Figur 1) festgestellt, ob ein aktiver Druckaufbau möglich ist. Ist dies nicht der Fall [Alternative (a)], dann liegt ein Fehlerzustand in der aktiven Druckversorgung (Pumpe 100 und/oder Pumpenelemente 110) vor (Schritt 230).

Ist ein Druckaufbau möglich [Alternative (b)], ist eine Leckage im Bremskreis (beispielsweise an den Einlassventilen 60, 70) vorhanden (Schritt 240).

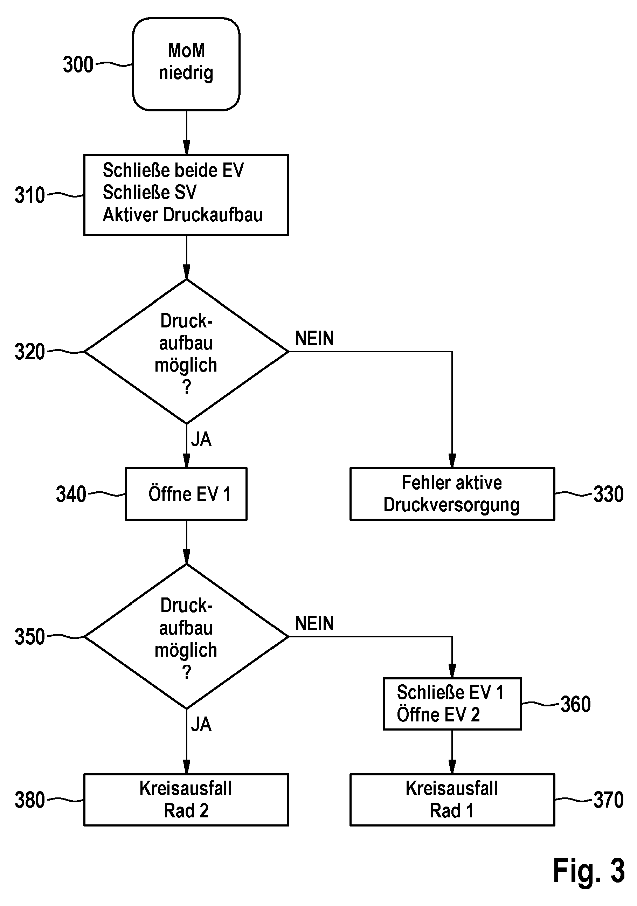

Figur 3 zeigt eine weitere Ausführungsform, wobei die Schritte 300, 310, 320, 330 jeweils den Schritten 200, 210, 220, 230 aus Figur 2 entsprechen.

Ist in Schritt 320 ein Druckaufbau möglich, wird in einem Schritt 340 Einlassventil 60 ("EV 1") geöffnet. In einem Schritt 350 wird jetzt wiederum festgestellt, ob ein Druckaufbau möglich ist. Ist dies nicht der Fall, wird in einem Schritt 360 das Einlassventil 60 ("EV 1 ") geschlossen und das Einlassventil 70 ("EV 2") geöffnet. Es liegt dann eine Leckage zum Beispiel am Einlassventil des ersten Rades (oder am Auslassventil und/oder der Radverbindung) vor (Schritt 370). das Druckregelventil 80 teilweise bestromt bzw. angesteuert wird, um so den definierten Öffnungsdruck noch zu verringern.

Mit Bezug auf Figur 2 soll nun eine Ausführungsform des erfindungsgemäßen Verfahrens anhand eines Flussdiagramms erläutert werden.

In einem ersten Schritt 200 stellt eine Drucküberwachungseinheit MoM (MoM = modulator monitoring) einen (zu) niedrigen Fluiddruck im System 10 fest. Daraufhin werden beide Einlassventile 60, 70 sowie das (stromlos offene) Trennventil 90 geschlossen, so dass, mit Bezug auf Figur 1, ein geschlossener Fluidleitungskreislauf 16 (mit stärkerer Linienbreite angedeutet) entsteht. Über die Pumpe 100 wird aktiv Druck (über die Pumpenelemente 110) in dem Fluidleitungskreislauf 16 erzeugt (Schritt 210).

In einem Schritt 220 wird über den Drucksensor 120 (siehe Figur 1) festgestellt, ob ein aktiver Druckaufbau möglich ist. Ist dies nicht der Fall [Alternative (a)], dann liegt ein Fehlerzustand in der aktiven Druckversorgung (Pumpe 100 und/oder Pumpenelemente 110) vor (Schritt 230).

Ist ein Druckaufbau möglich [Alternative (b)], ist eine Leckage im Bremskreis (beispielsweise an den Einlassventilen 60, 70) vorhanden (Schritt 240).

Figur 3 zeigt eine weitere Ausführungsform, wobei die Schritte 300, 310, 320, 330 jeweils den Schritten 200, 210, 220, 230 aus Figur 2 entsprechen.

Ist in Schritt 320 ein Druckaufbau möglich, wird in einem Schritt 340 Einlassventil 60 ("EV 1 ") geöffnet. In einem Schritt 350 wird jetzt wiederum festgestellt, ob ein Druckaufbau möglich ist. Ist dies nicht der Fall, wird in einem Schritt 360 das Einlassventil 60 ("EV 1 ") geschlossen und das Einlassventil 70 ("EV 2") geöffnet. Es liegt dann eine Leckage zum Beispiel am Einlassventil des ersten Rades (oder am Auslassventil und/oder der Radverbindung) vor (Schritt 370).

Ist in Schritt 350 ein Druckaufbau möglich, liegt eine Leckage am (Einlassventil des) zweiten Rades vor (Schritt 380).

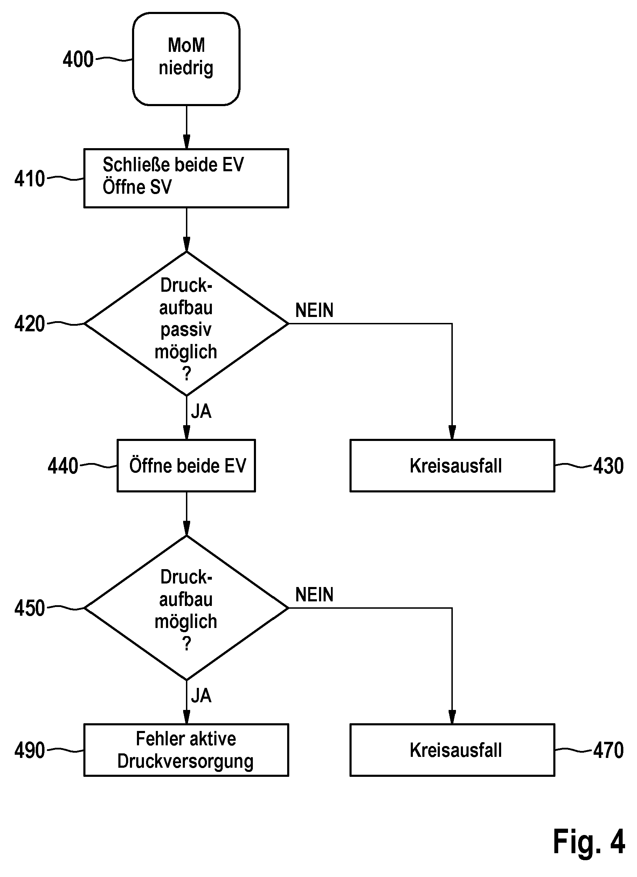

Figur 4 zeigt eine weitere Ausführungsform, wobei die Schritte 400, 420 jeweils den Schritten 300, 320 aus Figur 3 entsprechen.

In Schritt 410 werden zwar auch beide Einlassventile 60, 70 geschlossen, jedoch das Trennventil 90 geöffnet. Ist nun, da das Trennventil 90 geöffnet ist, durch Betätigen des Bremspedals 20 durch den Fahrer ein passiver Druckaufbau nicht möglich, wird dies in einem Schritt 430 als ein Kreisausfall bestimmt.

Ist ein passiver Druckaufbau in Schritt 420 möglich, werden beide Einlassventile 60, 70 geöffnet (Schritt 440). Ist kein passiver Druckaufbau möglich, wird dies in einem Schritt 430 als ein Kreisausfall bestimmt.

Fortfahrend von Schritt 440 (beide Einlassventile 60, 70) geöffnet, wird in Schritt 450 festgestellt, ob ein Druckaufbau möglich ist.

Ist kein Druckaufbau in Schritt 450 möglich, wird dies in einem Schritt 470 als Kreisausfall bestimmt.

Ist ein Druckaufbau in Schritt 450 möglich, wird dies in einem Schritt 490 als Fehlerzustand in der aktiven Druckversorgung (Pumpe 100 und/oder Pumpenelemente 110) bestimmt.

Zusammenfassend kennzeichnet sich die vorliegende Erfindung dadurch aus, dass, bei Vorliegen eines Druckabfalls im Bremssystem, durch Erzeugen eines geschlossenen Fluidleitungskreislaufs 16 innerhalb des Bremssystems sowie iteratives aktives bzw. passives Druckaufbauen und Schließen bzw. Öffnen der einzelnen Einlassventile 60, 70 an den Rädern der Vorderachse und Schließen des Trennventils 90 gezielt bestimmt werden kann, ob ein Fehlerzustand in der aktiven Druckversorgung oder eine Leckage an einem der Räder vorliegt (so genannte Rad-individuelle Fehler-Unterscheidung), so dass eine Fahrsicherheit für den Fahrer (und natürlich mögliche Passagiere im Fahrzeug) erhöht ist, da bei gezielter Bestimmung des entsprechenden Fehlerzustands auch entsprechende Gegenmaßnahmen getroffen werden können (entweder automatisch oder durch den Fahrer).

Selbstverständlich sind die beschriebenen Verfahren auch für einen Bremskreislauf der Hinterachse anwendbar.

Weiterhin wird darauf hingewiesen, dass das Druckregelventil 80 auch teilweise bestromt bzw. (von der nicht dargestellten Fahrzeugsteuerung) angesteuert werden kann, um einen definierten Öffnungsdruck des Druckregelventils 80 in entsprechender Weise zu reduzieren. Die Funktion des Drucksensors 120 kann nach Bedarf, z.B. nach Feststellen eines Fehlerzustandes, durch einen Selbsttest überprüft werden.

## Patentansprüche

1. Verfahren zur Identifizierung eines Ausfalls eines Bremskreislaufsystems eines Fahrzeuges, wobei das Bremskreislaufsystem wenigstens einen mit einem unter Druck stehenden Fluid gefüllten Bremskreislauf (15), welcher über ein Trennventil (90) an einem Hauptbremszylinder (30) und über ein Druckregelventil (80) an einem Vorratsbehälter (40) angebunden ist, umfasst, und wobei das Verfahren folgende Schritte umfasst:
- Feststellen (Schritte 200; 300), ob ein Fluid-Druckabfall in dem Bremskreislauf (15) vorliegt; und
- bei Feststellung des Fluid-Druckabfalls in dem Bremskreislauf (15), Schließen von Fluidverbindungen während eines Versuchs eines Erzeugens eines Druckaufbaues mittels wenigstens einer Pumpe;
**gekennzeichnet durch** die Schritte:
- bei Feststellung des Fluid-Druckabfalls in dem Bremskreislauf (15) Schließen von Fluidverbindungen jeweils zu dem Hauptbremszylinder (30), zu dem Vorratsbehälter (40) und zu Hydraulikeinheiten des Bremskreislaufs (15) an zu bremsenden Rädern des Fahrzeuges **durch** Schließen des Trennventils (90), des Druckregelventils (80) und der Einlassventile (60, 70) des Bremskreislaufs (15), so dass ein geschlossenes Fluidsystem (16) erzeugt wird;
- Versuch des Erzeugens (Schritte 210; 310) eines Druckaufbaus in dem geschlossenen Fluidsystem (16) mittels der wenigstens einen Pumpe (110), welche parallel zu dem Druckregelventil (80) an dem Vorratsbehälter (40) angebunden ist; und
- Feststellen (Schritte 220; 320), ob ein Druckaufbau in dem geschlossenen Fluidsystem (16) erzeugt worden ist.

2. Verfahren nach Anspruch 1, wobei, wenn kein Druckaufbau in dem geschlossenen Fluidsystem (16) erzeugt worden ist, bestimmt wird (Schritte 230; 330), dass ein Druckabfall-Fehlerzustand beim Erzeugen des Druckaufbaus durch die wenigstens eine Pumpe (110) vorliegt.

3. Verfahren nach Anspruch 1 oder 2, wobei, wenn ein Druckaufbau in dem geschlossenen Fluidsystem erzeugt worden ist, bestimmt wird (Schritte 240; 380), dass ein Druckabfall-Fehlerzustand in dem wenigstens einen Bremskreislauf aufgrund einer Leckage vorliegt.

4. Verfahren nach Anspruch 1, wobei, wenn trotz des Versuchs des Erzeugens (Schritte 210; 310) eines Druckaufbaues in dem geschlossenen Fluidsystem (16) mittels der wenigstens einen Pumpe (110) kein Druckaufbau in dem geschlossenen Fluidsystem (16) erzeugt worden ist, das Verfahren die folgenden Schritte umfasst:
- Schließen von Fluidverbindungen jeweils zu dem Vorratsbehälter (40) und Hydraulikeinheiten des Bremskreislaufs (15) an den zu bremsenden Rädern des Fahrzeuges durch Schließen des Druckregelventils (80) und der Einlassventile (60, 70) des Bremskreislaufs (15) und Öffnen einer Fluidverbindung zwischen dem Bremskreislauf (15) und dem Hauptbremszylinder (30) durch Öffnen des Trennventils (90) (Schritt 410); und
- Feststellen (Schritt 420), ob durch Betätigen eines Bremspedales (20) durch einen Nutzer ein Druckaufbau in dem Bremskreislauf (15) erzeugt worden ist.

5. Verfahren nach Anspruch 4, wobei, wenn kein Druckaufbau in dem Fluidsystem (15) erzeugt worden ist, bestimmt wird, dass ein Druckabfall-Fehlerzustand an einer Fluidverbindung zu einem zu bremsenden Rad vorliegt.

6. Verfahren nach Anspruch 4 oder 5, wobei, wenn ein Druckaufbau in dem Fluidsystem erzeugt worden ist, (Schritt 440) die Einlassventile (60, 70) geöffnet werden und (Schritt 450) überprüft wird, ob ein Druckaufbau durch Betätigen des Bremspedales (20) durch den Nutzer möglich ist.

## Claims

1. Method for identifying a failure of a brake circuit system of a vehicle, wherein the brake circuit system comprises at least one brake circuit (15) which is filled with a pressurized fluid and which is connected to a master brake cylinder (30) via an isolating valve (90) and to a reservoir container (40) via a pressure-regulating valve (80), and wherein the method comprises the following steps:
- detecting (steps 200; 300) whether a fluid pressure drop in the brake circuit (15) is present; and
- when the fluid pressure drop is detected in the brake circuit (15), closing fluid connections during an attempt to generate an increase in pressure by means of at least one pump;
**characterized by** the steps:
- when the fluid pressure drop is detected in the brake circuit (15), closing fluid connections in each case to the master brake cylinder (30), to the reservoir container (40) and to hydraulic units of the brake circuit (15) at wheels of the vehicle which are to be braked by closing the isolating valve (90), the pressure-regulating valve (80) and the inlet valve (60, 70) of the brake circuit (15), so that a closed fluid system (16) is generated;
- attempting to generate (steps 210; 310) an increase in pressure in the closed fluid system (16) by means of the at least one pump (110) which is connected to the reservoir container (40) in parallel with the pressure-regulating valve (80); and
- detecting (steps 220; 320) whether an increase in pressure has been generated in the closed fluid system (16).

2. Method according to Claim 1, wherein if no increase in pressure has been generated in the closed fluid system (16), it is determined (steps 230; 330) that a pressure drop fault state is present when the pressure increase is generated by means of the at least one pump (110).

3. Method according to Claim 1 or 2, wherein if an increase in pressure has been generated in the closed fluid system, it is determined (steps 240; 380) that a pressure drop fault state is present in the at least one brake circuit owing to a leak.

4. Method according to Claim 1, wherein if, despite the attempt to generate (steps 210; 310) an increase in pressure in the closed fluid system (16) by means of the at least one pump (110), an increase in pressure has not been generated in the closed fluid system (16), the method comprises the following steps:
- closing fluid connections in each case to the reservoir container (40) and hydraulic units of the brake circuit (15) at the wheels of the vehicle which are to be braked, by closing the pressure-regulating valve (80) and the inlet valve (60, 70) of the brake circuit (15) and opening a fluid connection between the brake circuit (15) and the master brake cylinder (30) by opening the isolating valve (90) (step 410); and
- detecting (step 420) whether an increase in pressure has been generated in the brake circuit (15) by a user activating a brake pedal (20).

5. Method according to Claim 4, wherein if an increase in pressure has not been generated in the fluid system (15), it is determined that a pressure drop fault state is present at a fluid, connection to a wheel which is to be braked.

6. Method according to Claim 4 or 5, wherein if an increase in pressure has been generated in the fluid system, the inlet valves (60, 70) are opened (step 440), and it is checked (step 450) whether an increase in pressure is possible by the user activating the brake pedal (20).

## Revendications

1. Procédé d'identification d'une panne d'un système de circuit de freinage d'un véhicule, le système de circuit de freinage comprenant au moins un circuit de freinage (15) rempli d'un fluide sous pression, ledit circuit étant raccordé, via une soupape d'arrêt (90), à un maître-cylindre de frein (30) et, via une soupape de régulation de pression (80), à un bac de réserve (40) et le procédé comprenant les étapes suivantes :
- détermination (étape 200 ; 300) de la présence d'une chute de pression de fluide dans le circuit de freinage (15) ; et
- en cas de détermination de la chute de pression de fluide dans le circuit de freinage (15), fermeture des liaisons de fluide pendant un essai de réalisation d'une mise en pression à l'aide d'au moins une pompe ; **caractérisé par** les étapes suivantes :
- en cas de détermination de la chute de pression de fluide dans le circuit de freinage (15), fermeture des liaisons de fluide conduisant respectivement au maître-cylindre de frein (30), au bac de réserve (40) et aux unités hydrauliques du circuit de freinage (15) au niveau des roues du véhicule à faire freiner par fermeture de la soupape d'arrêt (90), de la soupape de régulation de pression (80) et des soupapes d'admission (60, 70) du circuit de freinage (15), de sorte qu'un système de fluide (16) fermé est produit ;
- essai de la réalisation (étapes 210 ; 310) d'une mise en pression dans le système de fluide (16) fermé à l'aide de l'au moins une pompe (110) raccordée au bac de réserve (40) parallèlement à la soupape de régulation de pression (80) ; et
- détermination (étapes 220 ; 320) de si une mise en pression s'est produite dans le système de fluide (16) fermé.

2. Procédé selon la revendication 1, un état d'anomalie de chute de pression étant déterminé lorsqu'aucune mise en pression n'est produite dans le système de fluide (16) fermé (étapes 230 ; 330) en cas de réalisation de la mise en pression par le biais de l'au moins une pompe (110).

3. Procédé selon la revendication 1 ou 2, un état d'anomalie de chute de pression étant déterminé dans l'au moins un circuit de freinage du fait d'une fuite (étapes 240 ; 380) lorsqu'une mise en pression est produite dans le système de fluide fermé.

4. Procédé selon la revendication 1, dans lequel lorsqu'aucune mise en pression ne se produit dans le système de fluide (16) fermé malgré l'essai de réalisation (étapes 210 ; 310) d'une mise en pression dans le système de fluide (16) fermé à l'aide de l'au moins une pompe (110), le procédé comprend les étapes suivantes :
- fermeture des liaisons de fluide conduisant respectivement au bac de réserve (40) et aux unités hydrauliques du circuit de freinage (15) au niveau des roues du véhicule à faire freiner par fermeture de la soupape de régulation de pression (80) et des soupapes d'admission (60, 70) du circuit de freinage (15) et ouverture d'une liaison de fluide entre le circuit de freinage (15) et le maître-cylindre de frein (30) par ouverture de la soupape d'arrêt (90) (étape 410) ; et
- détermination (étape 420) de si oui ou non une mise en pression s'est produite dans le circuit de freinage (15) par actionnement d'une pédale de frein (20) par un utilisateur.

5. Procédé selon la revendication 4, dans lequel lorsqu'aucune mise en pression ne s'est produite dans le système de fluide (15), on détermine la présence d'un état d'anomalie de chute de pression au niveau d'une liaison de fluide conduisant à une roue à faire freiner.

6. Procédé selon la revendication 4 ou 5, dans lequel lorsqu'une mise en pression s'est produite dans le système de fluide, les soupapes d'admission (60, 70) sont ouvertes (étape 440) et contrôlées (étape 450) pour voir si une mise en pression par actionnement de la pédale de frein (20) par l'utilisateur est possible.
